# DEMANDE DE BREVET EUROPEEN

(11) **EP 4 660 092 A1**
(43) Date de publication de la demande: **10.12.2025**
(21) Numéro de dépôt: 25175464.4
(22) Date de dépôt: 09.05.2025
(51) Int. Cl.: B65D 1/02

(54) **RÉCIPIENT AYANT UN FOND À ONDULATIONS ET FOND DE MOULE POUR LA FABRICATION D'UN TEL RÉCIPIENT**

(30) Priorité: 06.06.2024 FR 2405975
(71) Demandeur: Sidel Participations, 76930 Octeville-sur-Mer (FR)
(72) Inventeur: BOUKOBZA, Michel, 76930 OCTEVILLE-SUR-MER (FR)
(74) Mandataire: Sidel Group

(57) **Abrégé**

La présente invention concerne un récipient (1) en plastique muni d'un corps (5) et d'un fond (6) s'étendant depuis une extrémité inférieure du corps, ledit corps (5) comprenant à son extrémité supérieure un épaulement (4) et un col (2), et le fond (6) comprenant au moins un talon (7) périphérique définissant une assise (8), et une voûte (10) qui s'étend depuis une zone centrale (11) jusqu'audit talon (7), ledit talon (7) remontant sur une paroi de raccordement (9) avec la paroi du corps (5) du récipient (1), remarquable en ce que ledit fond (6) comporte une pluralité d'ondulations radiales (13) s'étendant depuis au moins la zone centrale (11)jusqu'à proximité de l'assise (8), i.e. s'étendant au niveau de la voûte (6), une ondulation étant constituée d'une face concave (13a) et d'une face convexe (13b) tournées vers l'extérieur, la profondeur, c'est-à-dire la distance entre la crête d'une convexité (13b) et le fond d'une concavité (13a) desdites ondulations (13) étant croissante depuis la zone centrale (11) jusqu'à proximité de l'assise (8).

Un autre objet de l'invention concerne un fond de moule (23) pour la fabrication d'un tel récipient (1).

## Description

### Domaine technique

La présente invention concerne le domaine des récipients, notamment bouteilles ou pots, fabriqués par soufflage ou étirage soufflage à partir d'ébauches en matière plastique telle que du polyéthylène téréphtalate (PET) et plus particulièrement à partir d'ébauches obtenues en tout ou partie à partir de polyéthylène téréphtalate recyclé (rPET).

### Etat de la technique

Il est bien connu que les récipients destinés à contenir un liquide plat (par exemple des bouteilles destinées à contenir de l'eau de table) sont, dans la plupart des cas, munis d'un fond bombé en forme générale de calotte sphérique à concavité tournée vers l'extérieur et de relativement faible hauteur.

Usuellement, les fonds de ces récipients sont munis de nervures rayonnant sensiblement radialement qui sont réparties autour d'un renfoncement central, lesdites nervures pouvant présenter des conformations diverses et pouvant éventuellement déborder sur le bas de la paroi du corps afin de renforcer l'assise (zone périphérique par laquelle le fond repose sur un support).

De tels fonds sont conformés pour supporter sans déformation la colonne de liquide plat qui les surmonte. Mais ils ne présentent pas une résistance suffisante pour supporter une contrainte supplémentaire, pouvant par exemple être due à une surpression intérieure, même de faible valeur.

Or, il est connu, lors du conditionnement de certains liquides plats facilement oxydables tels que de l'huile ou des jus de fruits notamment, de verser une petite quantité liquide telle qu'une goutte d'une substance inerte à vaporisation rapide, usuellement de l'azote sur la surface du liquide plat à la fin de la phase de remplissage du récipient afin d'évacuer l'air, et donc l'oxygène contenu dans celui-ci, du volume libre surmontant la surface liquide immédiatement avant le bouchage du récipient, selon une opération dite d'"inertage" ou d'"azotage", afin, par exemple, de renforcer des bouteilles d'eau plate allégée.

Cette petite quantité de substance inerte finit de se vaporiser une fois le bouchage terminé, de sorte qu'il subsiste dans le récipient fermé du gaz d'inertage sous une faible pression résiduelle inférieure à 1,5x10⁵ Pa, typiquement de l'ordre de 0,8x10⁵ Pa, voire de l'ordre de 0,5x10⁵ Pa.

Toutefois, les fonds faiblement bombés traditionnellement prévus pour les récipients destinés aux liquides plats ne sont pas en mesure de supporter de façon certaine, sans déformation, une pression même aussi faible que celle engendrée par le processus d'inertage.

Afin de remédier à cet inconvénient, il est bien connu, pour des récipients dont les contenus doivent subir un processus d'inertage, de les équiper de fonds améliorés en termes de résistance de manière qu'ils ne se déforment pas sous l'action de la surpression intérieure.

Un fond renforcé de ce type comporte usuellement une voûte de forme générale bombée à concavité tournée vers l'extérieur du récipient et possède une zone annulaire entourant la voûte et formant une assise sensiblement plane par laquelle ledit fond peut reposer de façon stable sur un support plan. Dans sa partie centrale, la voûte s'ouvre sur un dôme bombé également à concavité tournée vers l'extérieur, ledit dôme étant donc situé en retrait vers l'intérieur du récipient par rapport à la voûte. A l'extérieur de la zone annulaire formant une assise, le fond présente une paroi, en retour, encore appelée paroi de raccordement avec la paroi du corps du récipient. Plusieurs nervures principales ouvertes vers l'extérieur, en forme générale de gouttières à bords sensiblement parallèles et de profondeur sensiblement constante, s'étendent radialement en étoile depuis la paroi en retour du fond jusqu'au dôme dans lequel elles se terminent, en traversant la zone annulaire formant une assise et la voûte, le nombre de nervures principales étant usuellement impair, généralement égal à cinq.

Par ailleurs, pour améliorer la tenue mécanique du fond, il est généralement ajouté des nervures secondaires, qui peuvent avoir sensiblement la même conformation que les nervures principales, qui sont intercalées entre les nervures principales, mais s'étendent radialement en étoile depuis la paroi en retour du fond seulement jusqu'au milieu de la voûte, en traversant la zone annulaire formant une assise. On soulignera que toutes les nervures, aussi bien les nervures principales que les nervures secondaires, sont formées en creux dans la voûte, laquelle présente une conformation annulaire lisse uniquement entaillée par les nervures.

Or, les fabricants de récipients en matière thermoplastique recherchent de façon permanente un allègement des récipients, ce qui se traduit entre autres par un allègement des fonds des récipients.

De ce fait, des fonds de récipients ayant des formes qui donnaient initialement satisfaction ne convenait plus en raison de la diminution sensible de la quantité de matière mise en œuvre. C'est ainsi qu'il s'est avéré à l'expérience qu'un fond renforcé agencé comme décrit précédemment ne pouvait plus donner satisfaction, dans sa version allégée, même pour des surpressions de seulement environ 0,5x10⁵ Pa.

De surcroit, en raison des cadences de production de plus en plus élevées, de l'injection continue et in fine aléatoire de la quantité de liquide d'inertage et des variations de l'espace libre entre le liquide et le buvant des récipients le volume de liquide d'inertage peut varier très notablement occasionnant des variations de pression de plus ou moins 0,2 bars pour une pression cible de 0,6 bars, i.e. une variation d'environ 30% de la pression.

Dans ces conditions, les fonds précités, dans leur version allégée, ne sont donc pas en mesure de supporter de façon assurée une telle surpression sans s'affaisser.

Afin de pallier ces inconvénients, on a déjà imaginé un récipient pourvu d'un fond renforcé. C'est le cas notamment des documents FR 2 883 550 et FR2932458 notamment.

Ledit document FR 2 883 550 décrit un récipient dont le fond comporte une double structure de panneaux bombés, à la fois pour ce qui concerne les panneaux définis entre les empreintes saillantes dans le fond du récipient lui- même et pour ce qui concerne les voûtes desdites empreintes. Ainsi, un double système d'arc-boutement sur deux niveaux est constitué et, sans être capable de supporter des pressions élevées, est cependant apte à supporter sans déformation sensible une pression résiduelle relativement faible n'excédant pas environ 0,5x10⁵ Pa telle que celle qui subsiste après une opération d'inertage.

Toutefois, la fabrication de ce type de récipient nécessite une quantité importante de matière thermoplastique qui ne permet pas d'obtenir la version allégée que les fabricants requièrent usuellement.

Le document FR2932458 décrit un récipient, notamment bouteille, en matière thermoplastique telle que du PET, possédant un corps s'étendant entre, supérieurement, un col et, inférieurement, un fond apte à supporter sans déformation notable la surpression induite par une opération d'inertage n'excédant pas environ 2x10⁵ Pa. Ledit fond comprenant une voûte concave à concavité tournée vers l'extérieur du récipient, un dôme en saillie vers l'intérieur du récipient et à concavité tournée vers l'extérieur, s'ouvrant au centre de ladite voûte, une zone annulaire entourant la base de ladite voûte et formant une assise sensiblement plane par laquelle ledit fond peut reposer de façon stable sur un support plan, et des nervures en forme de gorges ouvertes vers l'extérieur, d'étendue sensiblement radiale traversant ladite zone annulaire formant une assise et remontant sur la paroi de raccordement avec la paroi du corps du récipient. Ledit fond comporte également des zones en forme de griffes, séparées les unes des autres, qui prolongent le bas du corps radialement en direction de l'axe central du fond et qui sont décalées en saillie externe par rapport à ladite voûte, et des gorges radiales délimitées entre lesdites zones en forme de griffes, gorges dont le fond est formé par des tronçons radiaux de ladite voûte et qui possèdent une profondeur radialement variable qui est maximale approximativement au droit de ladite zone annulaire formant une assise.

Tous ces types de récipient ne permettent pas d'être remplis avec des liquides plats et fermés en présence d'une pression relativement faible en principe de l'ordre de 0,5x10⁵ Pa et en pratique n'excédant pas environ 1x10⁵ Pa, dès lors que lesdits récipients sont obtenus dans du PET recyclé dit rPET, ledit rPET présentant des propriétés mécaniques différentes de celles du PET de sorte que les fonds de ces récipients ne présentent pas une résistance suffisante aux chocs.

### Divulgation de l'invention

L'un des buts de l'invention est donc de remédier à tout ou partie de ces inconvénients en proposant un récipient de conception simple et peu onéreuse, obtenus dans du PET recyclé dit rPET, apte à être rempli avec des liquides plats et fermés en présence d'une pression relativement faible en principe de l'ordre de 0,5x10⁵ Pa et en pratique n'excédant pas environ 1x10⁵ Pa, ne nécessitant qu'un minimum de matière thermoplastique, facile à conformer correctement dans les conditions habituelles de moulage par soufflage ou étirage-soufflage de récipients destinés à des liquides plats, présentant une bonne résistance aux chocs et présentant une hauteur sensiblement du même ordre de grandeur que celle des fonds de récipients traditionnels pour liquides plats.

A cet effet, et conformément à l'invention, il est proposé un récipient en plastique muni d'un corps et d'un fond s'étendant depuis une extrémité inférieure du corps, ledit corps comprenant à son extrémité supérieure un épaulement et un col, et le fond comprenant au moins un talon périphérique définissant une assise, et une voûte qui s'étend depuis une zone centrale jusqu'audit talon, ledit talon remontant sur une paroi de raccordement avec la paroi du corps du récipient, remarquable en ce que ledit fond comporte une pluralité d'ondulations radiales en continuité de tangence s'étendant depuis au moins la zone centrale jusqu'à proximité de l'assise, i.e. s'étendant au niveau de la voûte, une ondulation étant constituée d'une face concave et d'une face convexe tournées vers l'extérieur, la profondeur, c'est-à-dire la distance entre la crête d'une convexité et le fond d'une concavité, desdites ondulations étant croissante depuis la zone centrale jusqu'à proximité de l'assise.

De préférence, les ondulations radiales sont en continuité de tangence.

De manière alternative, lesdites ondulations radiales peuvent comporter au moins une facette, chaque facette s'étendant radialement ou s'étendant perpendiculairement à un rayon du fond, et chaque facette pouvant être plane ou en creux ou en relief et pouvant présentant une forme quelconque.

De préférence, le rayon de courbure moyen des concavités des ondulations est inférieur ou égal au rayon de courbure moyen des convexités des ondulations.

Par ailleurs, le rayon de courbure moyen des concavités des ondulations est compris entre 0,5 et 1,1 fois le rayon de courbure moyen des convexités des ondulations.

De préférence, ledit rayon de courbure moyen des concavités des ondulations est compris entre 0,65 et 0,85 fois le rayon de courbure moyen des convexités des ondulations.

Par ailleurs, le rayon de courbure moyen des concavités et/ou des convexités des ondulations n'est pas constant le long d'un rayon du fond, depuis la zone centrale vers le plan d'appui.

De plus, le fond comporte entre 5 et 15 d'ondulations radiales en continuité de tangence et, préférentiellement, entre 8 et 10 ondulations radiales en continuité de tangence.

De préférence, la hauteur de la voute, i.e. la distance séparant le plan d'assise à l'extrémité supérieure de la voûte, est comprise entre 0,15 et 0,35 fois le diamètre de l'assise.

Préférentiellement, la hauteur de la voute es comprise entre 0,2 et 0,25 fois le diamètre de l'assise, et préférablement égale à 0,228 fois le diamètre de l'assise.

Par ailleurs, la profondeur d'une ondulation au niveau du plan d'assise est comprise entre 0,2 et 0,45 fois la hauteur de la voûte.

De plus, la profondeur d'une ondulation au niveau de la zone centrale est comprise entre 0,03 et 0,15 fois la hauteur de la voûte.

De plus, entre la zone centrale et le plan d'assise, la profondeur d'une ondulation est comprise entre 0,2 et 0,45 fois la hauteur de la voûte.

Selon une variante d'exécution, lesdites ondulations s'étendent au-delà de l'assise.

Selon une autre variante d'exécution, la face concave des ondulations s'étend au-delà de l'assise et la face convexe des ondulations s'étend depuis la zone centrale jusqu'à proximité de l'assise.

Par ailleurs, le rayon de courbure dit extérieur du talon, i.e. le rayon de courbure du talon entre l'assise et la paroi de raccordement, est compris entre 0,07 et 0,2 fois le diamètre d'assise et, de préférence, est égal à 0,13 fois le diamètre d'assise.

De plus, le rayon de courbure dit intérieur du talon, i.e. le rayon de courbure du talon entre l'extrémité distale de la face convexe des ondulations et l'assise, est compris entre 0,6 et 1,4 fois le rayon de courbure extérieur dudit talon et, de préférence, est égal à 0,92 fois le rayon de courbure extérieur dudit talon.

Par ailleurs, la hauteur de la voûte, i.e. la distance séparant la zone centrale du plan d'assise, est comprise entre 0,2 et 0,4 fois le diamètre de l'assise.

De plus, la largeur de l'assise est comprise entre 0,1 et 2 mm et, préférentiellement, égale à 0,5 mm.

Un autre objet de l'invention concerne un fond de moule pour la fabrication d'un récipient selon l'invention à partir d'une préforme en plastique, ledit fond de moule étant apte à être monté à l'une des extrémités d'un moule comprenant deux parois mobiles l'une par rapport à l'autre et destinées à former le corps du récipient, ledit fond de moule comprenant au moins une première partie annulaire destinée à former au moins en partie le talon, i.e. le plan d'assise, une seconde partie en forme de dôme destinée à venir au contact d'une zone centrale amorphe de la préforme pour former la voûte, ou comprenant une rondelle de fond permettant de former le talon du récipient et d'une pièce de voûte venant s'insérer dans ladite rondelle de fond ; ledit fond de moule est remarquable en ce que ladite seconde partie ou la pièce de voûte comprend une pluralité d'ondulations radiales s'étendant depuis au moins une zone centrale jusqu'à la première partie annulaire ou jusqu'à la rondelle de fond, i.e. s'étendant au moins au niveau de la seconde partie en forme de dôme, la profondeur, c'est-à-dire la distance entre la crête d'une convexité et le fond d'une concavité, desdites ondulations étant croissante depuis la zone centrale jusqu'à la périphérie de la seconde partie ou jusqu'à la rondelle de fond.

De préférence, le rayon de courbure moyen des concavités des ondulations est inférieur ou égal au rayon de courbure moyen des convexités des ondulations.

Par ailleurs, le rayon de courbure moyen des concavités des ondulations est compris entre 0,5 et 1,1 fois le rayon de courbure moyen des convexités des ondulations et, préférentiellement, est compris entre 0,65 et 0,85 fois le rayon de courbure moyen des convexités des ondulations.

De plus, le rayon de courbure moyen des concavités et/ou des convexités des ondulations n'est pas constant le long d'un rayon du fond du fond de moule, depuis la zone centrale vers la périphérie de la seconde partie la rondelle de fond.

De préférence, le fond de moule comporte entre 3 et 15 d'ondulations radiales en continuité de tangence et, préférentiellement, comporte entre 8 et 10 ondulations radiales en continuité de tangence.

### Brève description des dessins

D'autres avantages et caractéristiques ressortiront mieux de la description qui va suivre de plusieurs variantes d'exécution, données à titre d'exemples non limitatifs, du récipient et du fond de moule pour la fabrication dudit récipient conformes à l'invention, en référence aux dessins annexés sur lesquels :
[Fig 1] est une vue de dessous en perspective d'un récipient en plastique suivant l'invention,
[Fig 2] est une vue de dessous en perspective du fond d'un récipient en plastique suivant l'invention,
[Fig 3] est une vue de dessous du fond du récipient en plastique suivant l'invention représenté sur les figures 1 et 2,
[Fig 4] est une vue de côté du fond du récipient en plastique suivant l'invention représenté sur les figures 1 à 3,
[Fig 5] est une vue de dessous en perspective déchirée du fond du récipient en plastique suivant l'invention représenté sur les figures 1 à 4,
[Fig 6] est une vue de dessus en perspective déchirée du fond du récipient en plastique suivant l'invention représenté sur les figures 1 à 5,
[Fig 7] est une vue en coupe radiale du fond du récipient en plastique suivant l'invention représenté sur les figures 1 à 6,
[Fig 8] est une vue de dessous en perspective d'une variante d'exécution du récipient en plastique suivant l'invention,
[Fig 9] est une vue de dessous en perspective du fond de la variante d'exécution du récipient suivant l'invention représenté sur la figure 8,
[Fig 10] est une vue dessous du fond de la variante d'exécution du récipient suivant l'invention représenté sur les figures 8 et 9,
[Fig 11] est une vue en coupe radiale du fond de la variante d'exécution du récipient en plastique suivant l'invention représenté sur les figures 8 à 10,
[Fig 12] est une vue en perspective éclatée d'un moule, incluant un fond de moule, pour la fabrication d'un récipient suivant l'invention,
[Fig 13] est une vue de dessus en perspective d'un fond de moule pour l'obtention d'un récipient suivant l'invention représenté sur les figures 1 à 7,
[Fig 14] est une vue de dessus du fond de moule pour l'obtention d'un récipient suivant l'invention représenté sur les figures 1 à 7,
[Fig 15] est une vue en coupe radiale du fond de moule suivant l'invention représenté sur les figures 13 et 14,
[Fig 16] est une vue de dessus en perspective d'une variante d'exécution d'un fond de moule pour l'obtention d'un récipient suivant l'invention représenté sur les figures 8 à 11,
[Fig 17] est une vue de dessus en perspective de de la variante d'exécution du fond de moule suivant l'invention représenté sur la figure 16,
[Fig 18] est une vue en coupe radiale de la variante d'exécution du fond de moule suivant l'invention représenté sur la figure 16.

### Mode de réalisation de l'invention

Dans la suite de la description du récipient et du fond de moule pour l'obtention dudit récipient suivant l'invention, les mêmes références numériques désignent les mêmes éléments. Par ailleurs, les différentes vues ne sont pas nécessairement tracées à l'échelle.

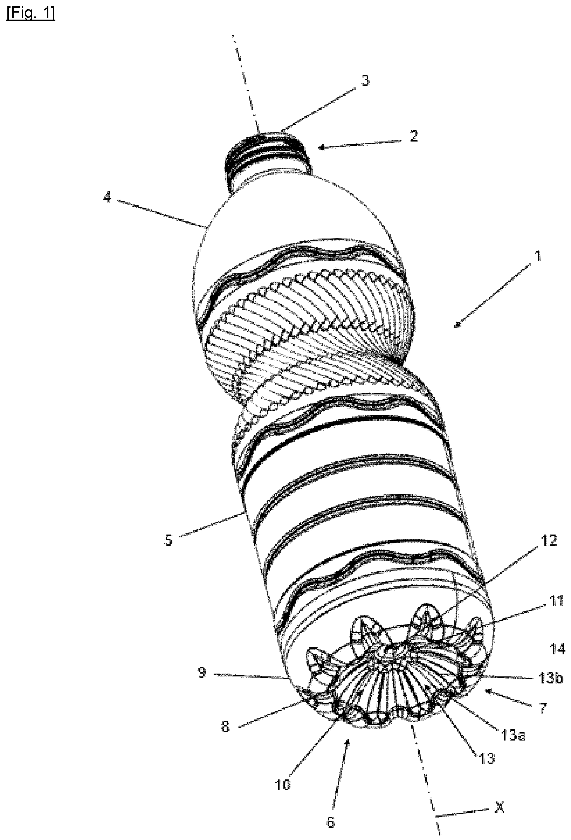

En référence à la figure 1, le récipient 1 suivant l'invention consiste, en l'occurrence, en une bouteille réalisée par étirage soufflage à partir d'une préforme en matière thermoplastique, par exemple en PET (polyéthylène téréphtalate) et/ou de rPET (polyéthylène téréphtalate recyclé), ou similaire.

Ledit récipient 1 comprend, à une extrémité supérieure, un col 2, muni d'un buvant 3. Dans le prolongement du col 2, en direction de l'extrémité inférieure du récipient 1, ce dernier comprend, de manière usuelle, dans sa partie supérieure une épaule 4 allant en s'évasant dans la direction opposée au col 2, cette épaule 4 étant prolongée par une paroi latérale ou corps 5, de forme généralement sensiblement cylindrique de révolution autour d'un axe longitudinal vertical X, représenté en traits discontinus, du récipient 1.

Le récipient 1 comprend en outre un fond 6 qui s'étend à l'opposé du col 2, à partir d'une extrémité inférieure du corps 5. Ledit fond 6 comprend un talon 7 périphérique sous forme d'un bourrelet annulaire qui s'étend sensiblement axialement dans le prolongement du corps 5. Le talon 7 se termine par un plan de pose 8, également appelé assise, perpendiculaire à l'axe longitudinal X du récipient 1, ledit plan de pose 8 définissant l'extrémité inférieure du récipient 1 et permettant au récipient 1 d'être posé, verticalement, sur une surface plane. De plus, ledit talon 7 remonte sur une paroi dite de raccordement 9 avec la paroi du corps 5 du récipient 1.

On note D1 le diamètre du plan de pose 8, le terme « diamètre » couvrant non seulement le cas (illustré) où le récipient 1 (et donc le fond 6) est à contour circulaire, mais également le cas où le récipient 1 serait à contour polygonal (par exemple carré), auquel cas le terme « diamètre » désignerait le diamètre du cercle dans lequel s'inscrirait ce polygone sans pour autant sortir du cadre de l'invention.

Par ailleurs, le fond 6 comprend également une voûte 10 concave, sous forme d'une calotte sensiblement sphérique à concavité tournée vers l'extérieur du récipient 1 en l'absence de contrainte, c'est-à-dire en l'absence de contenu dans le récipient 1. La voûte 10 s'étend à partir du talon 7 jusqu'à une zone centrale 11 du fond 6 formant un pion en saillie vers l'intérieur du récipient 1, avec en son centre une pastille 12 amorphe qui correspond à la zone d'injection du matériau constitutif de la préforme ayant servi à réaliser le récipient et peut remplir une fonction de centrage lors du formage, par soufflage, du récipient 1.

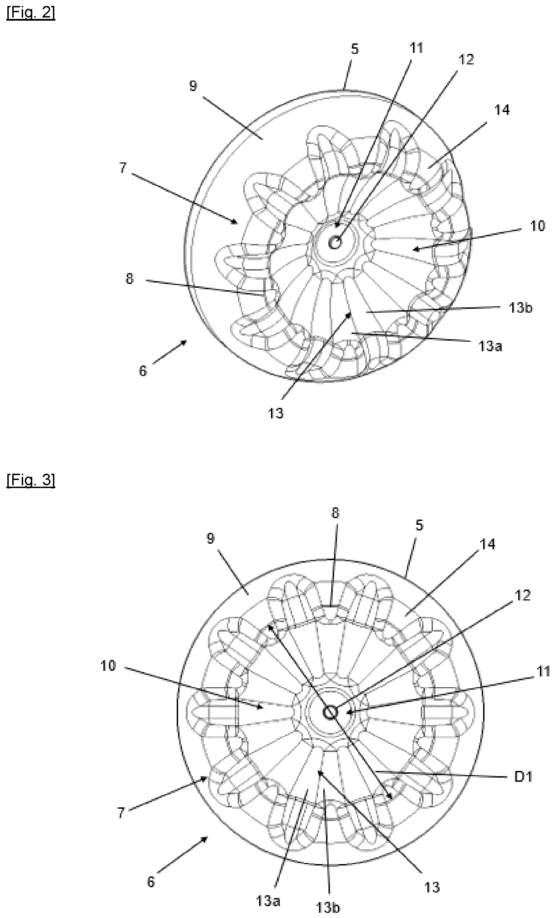

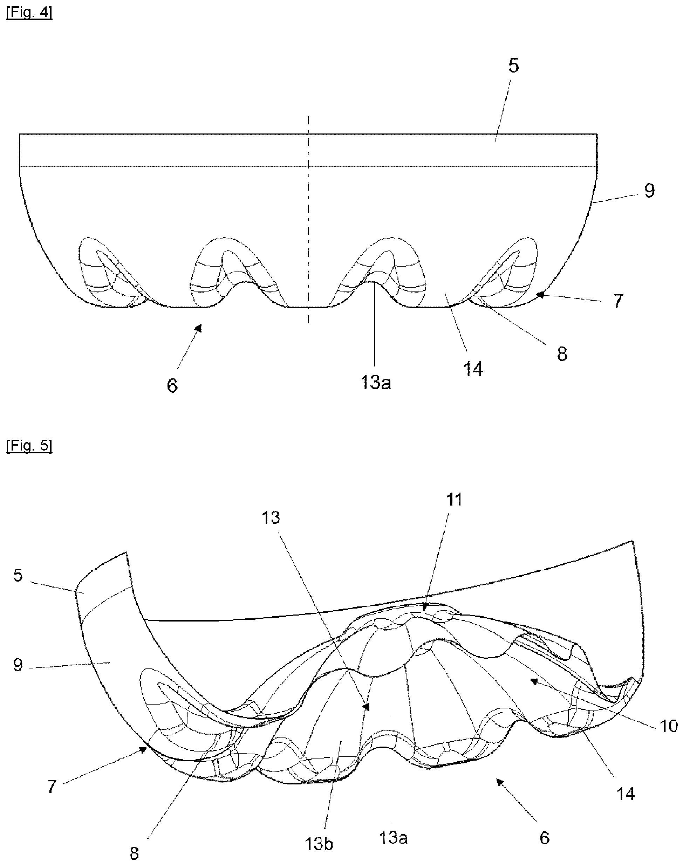

De plus, en référence aux figures 1 à 6, ledit fond 6 comporte une pluralité d'ondulations radiales 13 en continuité de tangence s'étendant depuis au moins la zone centrale 11 jusqu'à proximité du talon 7, i.e. s'étendant au niveau de la voûte 10, une ondulation 13 étant constituée d'une face concave 13a et d'une face convexe 13b tournées vers l'extérieur, la profondeur, c'est-à-dire la distance entre la crête d'une convexité et le fond d'une concavité, desdites ondulations 13 étant croissante depuis la zone centrale 10 jusqu'à proximité du talon 7.

Il est bien évident que lesdites ondulations radiales 13 pourront ne pas être en continuité de tangence et comporter, par exemple, une ou plusieurs facettes, de forme quelconque, planes et/ou en creux et/ou en relief, et s'étendant radialement ou perpendiculairement à un rayon du fond 6, sans pour autant sortir du cadre de l'invention.

Dans cette première variante d'exécution du récipient suivant l'invention, la face concave 13a des ondulations 13 s'étend au-delà de l'assise 8 et la face convexe 13b des ondulations 13 s'étend depuis la zone centrale jusqu'à proximité de l'assise 8. On entend par « à proximité de l'assise » quelques millimètres avant l'assise 8. Ainsi, dans cette variante d'exécution, la face convexe 13b des ondulations 13 s'étend jusqu'au niveau de la paroi de raccordement formant des pieds 14 au niveau de l'assise 8 qui, ainsi, est discontinue.

De préférence, le rayon de courbure moyen des concavités des ondulations 13 est inférieur ou égal au rayon de courbure moyen des convexités desdites ondulations 13. Plus précisément, le rayon de courbure moyen des concavités des ondulations 13 est compris entre 0,5 et 1,1 fois le rayon de courbure moyen des convexités des ondulations 13. On observera que l'on entend par « convexités des ondulations », les faces convexes 13b desdites ondulations.

Par ailleurs, ledit rayon de courbure moyen des concavités des ondulations 13 est compris entre 0,65 et 0,85 fois le rayon de courbure moyen des convexités des ondulations 13. On notera que l'on entend par « concavités des ondulations », les faces concaves 13a desdites ondulations.

Par ailleurs, le rayon de courbure moyen des concavités et/ou des convexités des ondulations 13 n'est pas constant le long d'un rayon du fond 6, depuis la zone centrale 11 vers l'assise 8.

Dans cet exemple particulier de réalisation, le fond 6 comporte 10 ondulations 13 radiales en continuité de tangence. Toutefois, en fonction des dimensions du récipient et/ou de l'application dudit récipient, ledit fond 6 pourra comprendre entre 5 et 15 d'ondulations radiales en continuité de tangence et, préférentiellement, entre 8 et 10 ondulations radiales en continuité de tangence.

Par ailleurs, la hauteur de la voute 10, i.e. la distance séparant le plan d'assise à l'extrémité supérieure de la voûte 10, est préférentiellement comprise entre 0,15 et 0,35 fois le diamètre D1 de l'assise 8. Préférentiellement, la hauteur de la voute 10 est comprise entre 0,2 et 0,25 fois le diamètre D1 de l'assise 8 et, préférablement, est égale à 0,228 fois le diamètre D1 de l'assise 8.

De manière avantageuse, la profondeur d'une ondulation 13 au niveau du plan d'assise, c'est-à-dire la distance entre la crête d'une convexité 13b et le fond d'une concavité 13a, est préférentiellement comprise entre 0,2 et 0,45 fois la hauteur de la voûte 10.

De plus, la profondeur d'une ondulation au niveau de la zone centrale est comprise entre 0,03 et 0,15 fois la hauteur de la voûte.

De plus, entre la zone centrale 11 et le plan d'assise, la profondeur d'une ondulation est comprise entre 0,2 et 0,45 fois la hauteur de la voûte 10.

De manière avantageuse, le rayon de courbure dit extérieur du talon, i.e. le rayon de courbure du talon entre l'assise et la paroi de raccordement, est compris entre 0,07 et 0,2 fois le diamètre d'assise et, de préférence, est égal à 0,13 fois le diamètre d'assise.

De plus, le rayon de courbure dit intérieur du talon 7, i.e. le rayon de courbure du talon 7 entre l'extrémité distale de la face convexe 13b des ondulations 13 et l'assise 8, est compris entre 0,6 et 1,4 fois le rayon de courbure extérieur dudit talon 7 et, de préférence, est égal à 0,92 fois le rayon de courbure extérieur dudit talon 7.

Par ailleurs, la hauteur de la voûte 10, i.e. la distance séparant la zone centrale 11 du plan d'assise, est comprise entre 0,2 et 0,4 fois le diamètre D1 de l'assise, la largeur de l'assise étant comprise entre 0,1 et 2 mm et, préférentiellement, égale à 0,5 mm.

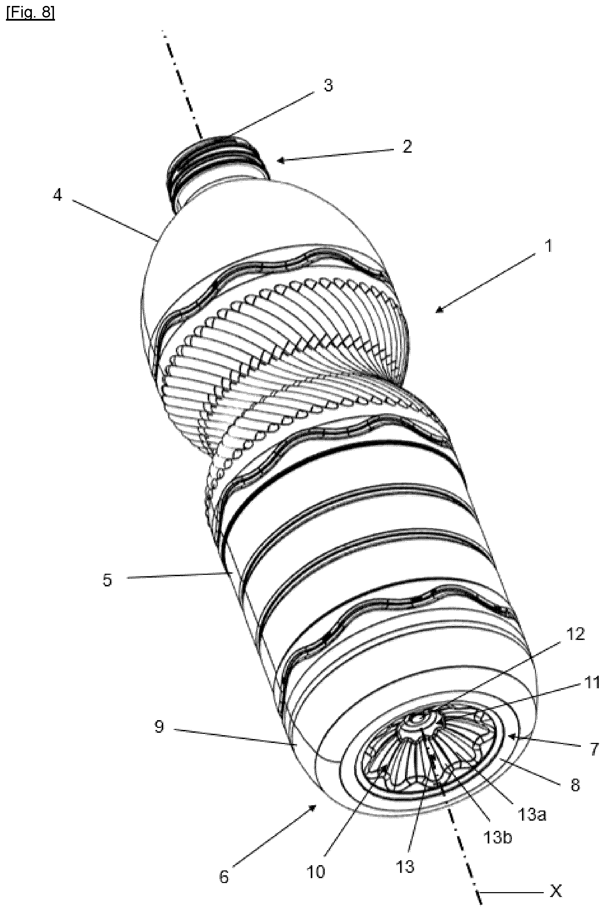

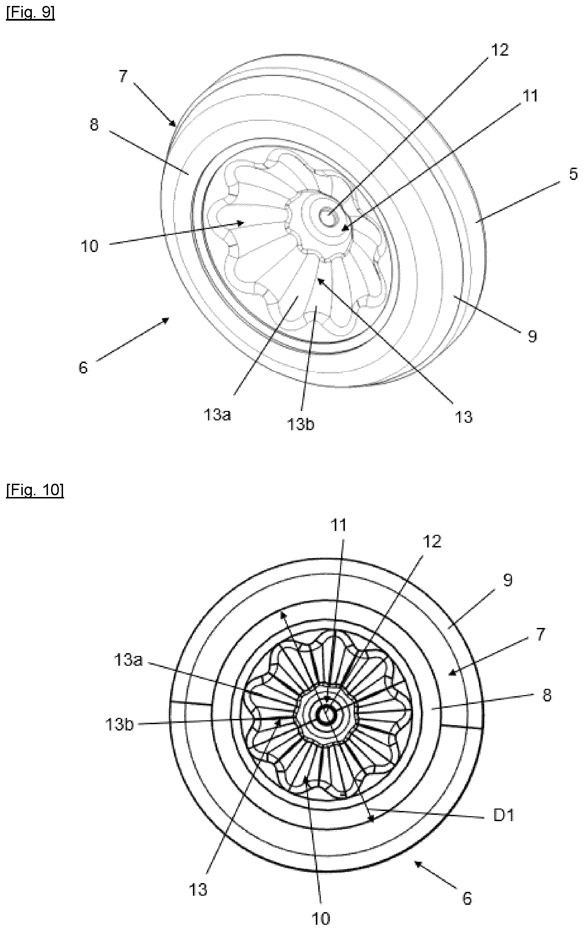

Selon une seconde variante d'exécution du récipient suivant l'invention en référence aux figures 8 à 11, le récipient 1 consiste, de la même manière que précédemment, en une bouteille réalisée par étirage soufflage à partir d'une préforme en matière thermoplastique, par exemple en PET (polyéthylène téréphtalate) et/ou de rPET (polyéthylène téréphtalate recyclé), ou similaire.

Ledit récipient 1 comprend, à une extrémité supérieure, un col 2, muni d'un buvant 3. Dans le prolongement du col 2, en direction de l'extrémité inférieure du récipient 1, ce dernier comprend, de manière usuelle, dans sa partie supérieure une épaule 4 allant en s'évasant dans la direction opposée au col 2, cette épaule 4 étant prolongée par une paroi latérale ou corps 5, de forme généralement sensiblement cylindrique de révolution autour d'un axe longitudinal vertical X, représenté en traits discontinus, du récipient 1.

Le récipient 1 comprend en outre un fond 6 qui s'étend à l'opposé du col 2, à partir d'une extrémité inférieure du corps 5. Ledit fond 6 comprend un talon 7 périphérique sous forme d'un bourrelet annulaire qui s'étend sensiblement axialement dans le prolongement du corps 5. Le talon 7 se termine par un plan de pose 8, également appelé assise, perpendiculaire à l'axe longitudinal X du récipient 1, ladite assise 8 définissant l'extrémité inférieure du récipient 1 et permettant au récipient 1 d'être posé, verticalement, sur une surface plane. De plus, ledit talon 7 remonte sur une paroi dite de raccordement 9 avec la paroi du corps 5 du récipient 1.

On note D1 le diamètre du plan de pose 8, le terme « diamètre » couvrant non seulement le cas (illustré) où le récipient 1 (et donc le fond 6) est à contour circulaire, mais également le cas où le récipient 1 serait à contour polygonal (par exemple carré), auquel cas le terme « diamètre » désignerait le diamètre du cercle dans lequel s'inscrirait ce polygone sans pour autant sortir du cadre de l'invention.

Par ailleurs, le fond 6 comprend également une voûte 10 concave, sous forme d'une calotte sensiblement sphérique à concavité tournée vers l'extérieur du récipient 1 en l'absence de contrainte, c'est-à-dire en l'absence de contenu dans le récipient 1. La voûte 10 s'étend à partir du talon 7 jusqu'à une zone centrale 11 du fond 6 formant un pion en saillie vers l'intérieur du récipient 1, avec en son centre une pastille 12 amorphe qui correspond à la zone d'injection du matériau constitutif de la préforme ayant servi à réaliser le récipient et peut remplir une fonction de centrage lors du formage, par soufflage, du récipient 1.

De plus, en référence aux figures 8 à 11, ledit fond 6 comporte une pluralité d'ondulations radiales 13 en continuité de tangence s'étendant depuis au moins la zone centrale 11 jusqu'à proximité de l'assis 8, i.e. s'étendant au niveau de la voûte 10, une ondulation 13 étant constituée d'une face concave 13a et d'une face convexe 13b tournées vers l'extérieur, la profondeur, c'est-à-dire la distance entre la crête d'une convexité et le fond d'une concavité, desdites ondulations 13 étant croissante depuis la zone centrale 10 jusqu'à proximité de l'assise 8.

Dans cette seconde variante d'exécution du récipient suivant l'invention, la face concave 13a et la face convexe 13b des ondulations 13 s'étend depuis la zone centrale 11 jusqu'à proximité de l'assise 8. On entend par « à proximité de l'assise » quelques millimètres avant l'assise 8. Ainsi, contrairement à la variante d'exécution précédente, le fond 6 ne comporte pas de pieds au niveau de l'assise 8, l'assise 8 étant ainsi continue.

De la même manière que précédemment, le rayon de courbure moyen des concavités des ondulations 13 est préférentiellement inférieur ou égal au rayon de courbure moyen des convexités desdites ondulations 13. Plus précisément, le rayon de courbure moyen des concavités des ondulations 13 est compris entre 0,5 et 1,1 fois le rayon de courbure moyen des convexités des ondulations 13. On observera que l'on entend par « convexités des ondulations », les faces convexes 13b desdites ondulations.

Par ailleurs, ledit rayon de courbure moyen des concavités des ondulations 13 est compris entre 0,65 et 0,85 fois le rayon de courbure moyen des convexités des ondulations 13. On notera que l'on entend par « concavités des ondulations », les faces concaves 13a desdites ondulations.

Par ailleurs, le rayon de courbure moyen des concavités et/ou des convexités des ondulations 13 n'est pas constant le long d'un rayon du fond 6, depuis la zone centrale 11 vers l'assise 8.

Dans cet exemple particulier de réalisation, le fond 6 comporte 9 ondulations 13 radiales en continuité de tangence. Toutefois, en fonction des dimensions du récipient et/ou de l'application dudit récipient, ledit fond 6 pourra comprendre entre 5 et 15 d'ondulations radiales en continuité de tangence et, préférentiellement, entre 8 et 10 ondulations radiales en continuité de tangence.

Par ailleurs, la hauteur de la voute 10, i.e. la distance séparant le plan d'assise à l'extrémité supérieure de la voûte 10, est préférentiellement comprise entre 0,15 et 0,35 fois le diamètre D1 de l'assise 8. Préférentiellement, la hauteur de la voute 10 est comprise entre 0,2 et 025 fois le diamètre D1 de l'assise 8et, préférablement, est égale à 0,228 fois le diamètre D1 de l'assise 8.

De plus, entre la zone centrale 11 et le plan d'assise, la profondeur d'une ondulation est comprise entre 0,2 et 0,45 fois la hauteur de la voûte 10.

Enfin, la hauteur de la voûte 10, i.e. la distance séparant la zone centrale 11 du plan d'assise, est comprise entre 0,2 et 0,4 fois le diamètre D1 de l'assise, la largeur de l'assise étant comprise entre 0,1 et 2 mm et, préférentiellement, égale à 0,5 mm.

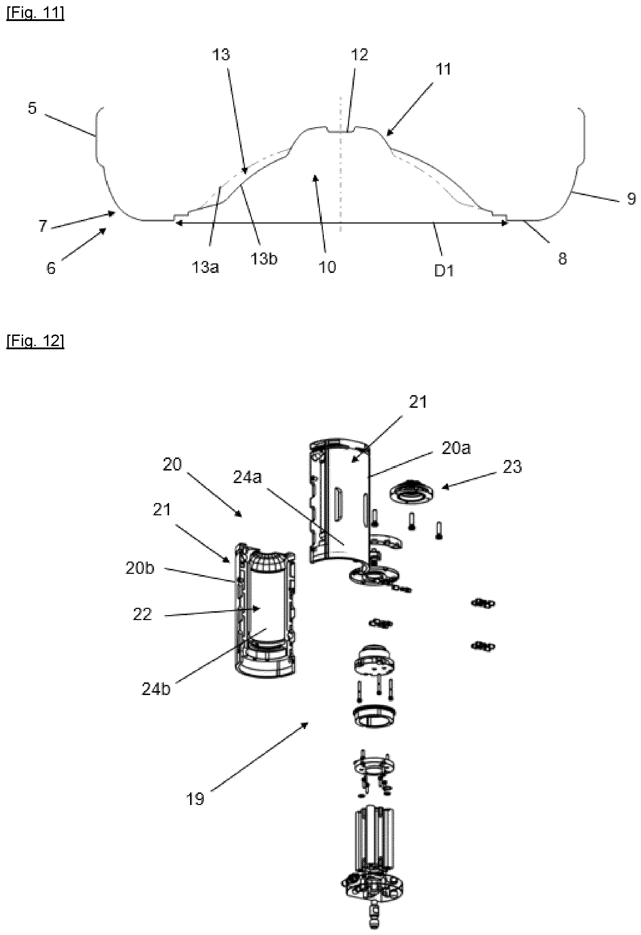

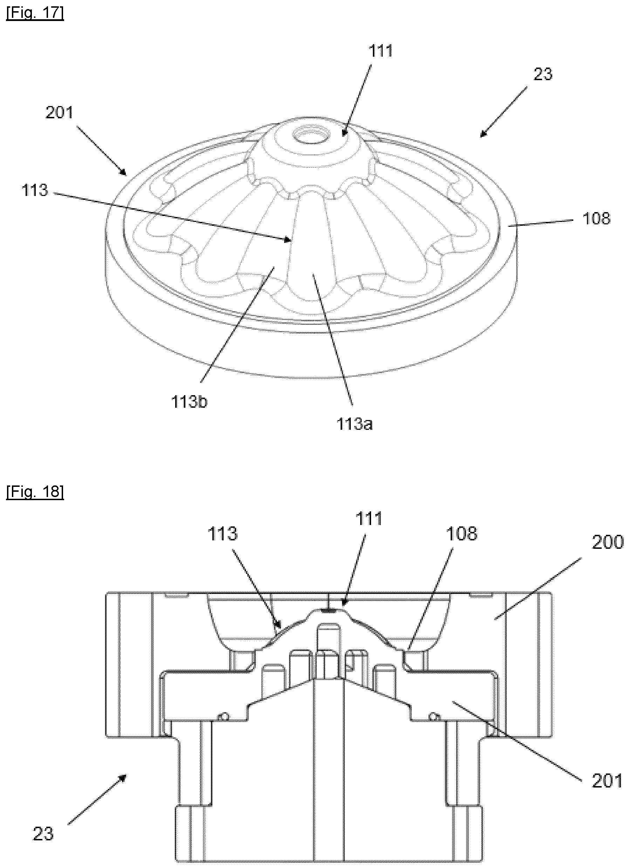

En référence aux figures 12 à 18, une unité de moulage 19 suivant l'invention est décrite pour le formage, à partir d'une ébauche, usuellement typiquement une préforme, d'un récipient suivant l'invention, tel qu'une bouteille ou un bidon, suivant l'invention.

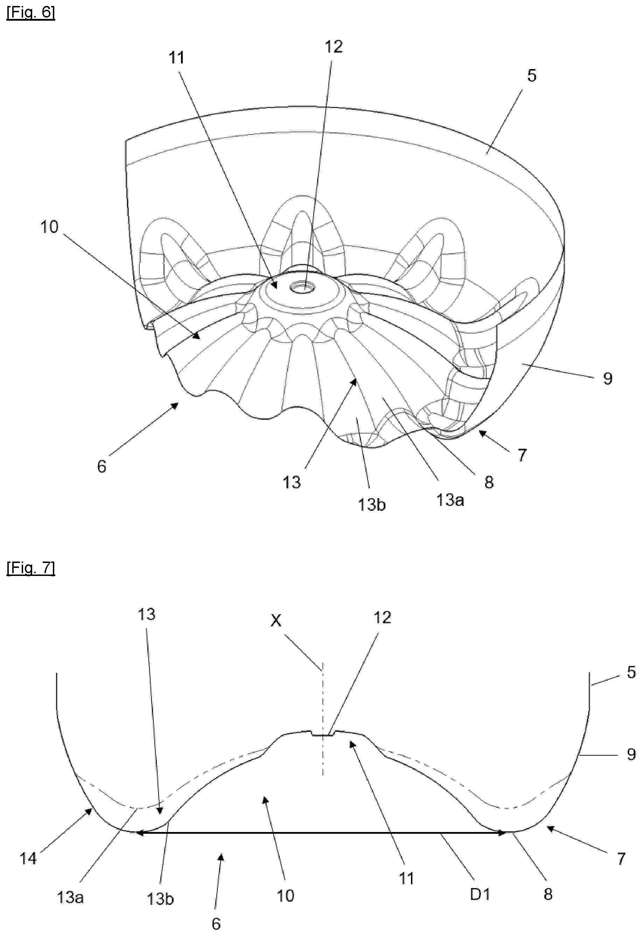

Ladite unité de moulage 19, en référence à la figure 12, comprend un moule 20 muni d'une paroi 21 latérale qui définit une cavité 22 à l'empreinte d'une partie du récipient. Ledit moule 20 comprend en outre un fond 23 à l'empreinte du fond du récipient, ledit moule 20 étant réalisé en métal, par exemple en acier ou en aluminium (ce terme couvrant également les alliages d'aluminium). La cavité 22, et in fine le récipient 20, s'étend suivant un axe X principal qui définit une direction verticale. Tout plan perpendiculaire à l'axe X principal est dit horizontal. Selon un mode de réalisation illustré sur les dessins, la paroi 21 latérale comprend deux demi-moules 20A, 20B définissant chacun une demi-empreinte 24A, 24B du corps du récipient et montés en rotation l'un par rapport à l'autre autour d'un axe commun formé par une charnière, non représentée sur les figures, entre une position ouverte, dans laquelle les demi-moules 20A, 20B sont écartés angulairement l'un de l'autre et le fond de moule 23 est abaissé relativement aux demi-moules 20A, 20B pour permettre l'introduction de l'ébauche et l'évacuation du récipient formé, et une position fermée, dans laquelle les demi-moules 20A, 20B sont appliqués l'un contre l'autre et emprisonnent entre eux le fond 23 de moule, tel que représenté sur les figures 6 à 8, pour former ainsi la cavité 22 et définir l'empreinte du récipient à former. Ainsi, ledit fond de moule 23 est apte à être monté mobile dans le moule 20 comprenant deux parois mobiles l'une par rapport à l'autre et destinées à former le corps du récipient.

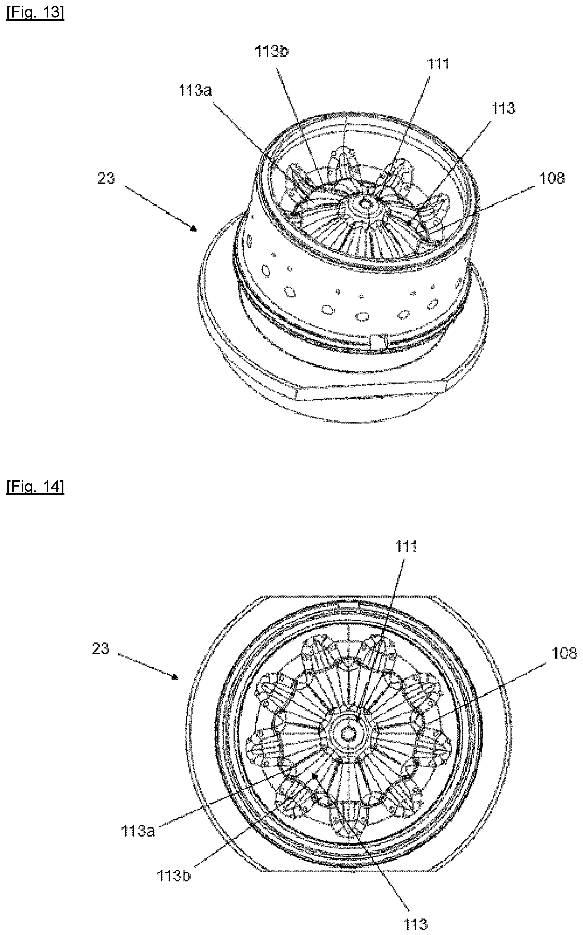

En référence aux figures 13 à 15, pour la fabrication d'un récipient suivant l'invention représenté sur les figures 1 à 7, ledit fond de moule 23 comprend une pluralité d'ondulations radiales 113 en continuité de tangence s'étendant depuis une zone centrale 111 jusqu'à proximité d'une assise 108, i.e. s'étendant au niveau d'une voûte 110, une ondulation 113 étant constituée d'une face concave 113a et d'une face convexe 113b tournées vers l'extérieur, la profondeur, c'est-à-dire la distance entre la crête d'une convexité et le fond d'une concavité, desdites ondulations étant croissante depuis la zone centrale111 jusqu'à proximité de l'assise 108.

De préférence, le rayon de courbure moyen des concavités des ondulations 113 est inférieur ou égal au rayon de courbure moyen des convexités des ondulations 113.

Par ailleurs, le rayon de courbure moyen des concavités 113a des ondulations est compris entre 0,5 et 1,1 fois le rayon de courbure moyen des convexités 113b des ondulations et, préférentiellement, est compris entre 0,65 et 0,85 fois le rayon de courbure moyen des convexités 113 b des ondulations 113.

De plus, le rayon de courbure moyen des concavités 113a et/ou des convexités 113b des ondulations 113 n'est pas constant le long d'un rayon du fond du fond de moule 23, depuis la zone centrale 111 vers la périphérie de l'assise 108.

De préférence, le fond de moule 23 comporte entre 5 et 15 d'ondulations 113 radiales en continuité de tangence et, préférentiellement, comporte entre 8 et 10 ondulations 113 radiales en continuité de tangence.

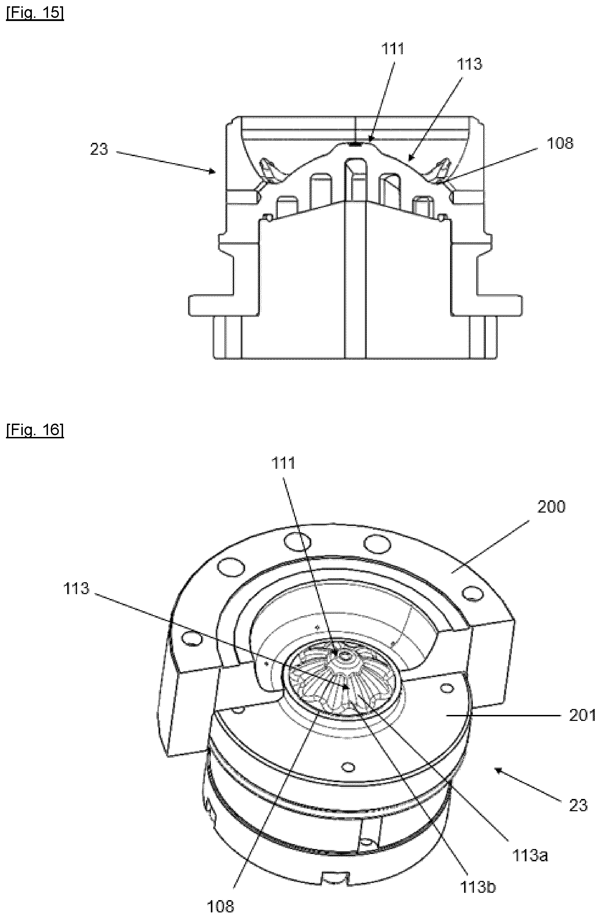

Selon une variante d'exécution, en référence aux figures 16 à 18, pour la fabrication d'un récipient suivant l'invention représenté sur les figures 8 à 11, ledit fond de moule 23 est constitué d'une rondelle de fond 200 permettant de former le talon du récipient et d'une pièce de voûte 201 venant s'insérer dans ladite rondelle de fond 200. Ladite pièce de voûte 201 du fond de moule 23 comprend une pluralité d'ondulations radiales 113 en continuité de tangence s'étendant depuis une zone centrale 111 jusqu'à proximité d'une assise 108, i.e. s'étendant au niveau d'une voûte 110, une ondulation 113 étant constituée d'une face concave 113a et d'une face convexe 113b tournées vers l'extérieur, la profondeur, c'est-à-dire la distance entre la crête d'une convexité et le fond d'une concavité, desdites ondulations étant croissante depuis la zone centrale111 jusqu'à proximité de l'assise 108.

De préférence, le rayon de courbure moyen des concavités des ondulations est inférieur ou égal au rayon de courbure moyen des convexités des ondulations 113.

Par ailleurs, le rayon de courbure moyen des concavités 113a des ondulations est compris entre 0,5 et 1,1 fois le rayon de courbure moyen des convexités 113b des ondulations et, préférentiellement, est compris entre 0,65 et 0,85 fois le rayon de courbure moyen des convexités 113 b des ondulations 113.

De plus, le rayon de courbure moyen des concavités 113a et/ou des convexités 113b des ondulations 113 n'est pas constant le long d'un rayon du fond du fond de moule 23, depuis la zone centrale 111 vers la périphérie de l'assise 108.

De préférence, le fond de moule 23 comporte entre 5 et 15 d'ondulations 113 radiales en continuité de tangence et, préférentiellement, comporte entre 8 et 10 ondulations 113 radiales en continuité de tangence.

Enfin, il est bien évident que les exemples que l'on vient de donner ne sont que des illustrations particulières en aucun cas limitatives quant aux domaines d'application de l'invention.

## Revendications

1. Récipient (1) en plastique muni d'un corps (5) et d'un fond (6) s'étendant depuis une extrémité inférieure du corps, ledit corps (5) comprenant à son extrémité supérieure un épaulement (4) et un col (2), et le fond (6) comprenant au moins un talon (7) périphérique définissant une assise (8), et une voûte (10) qui s'étend depuis une zone centrale (11) jusqu'audit talon (7), ledit talon (7) remontant sur une paroi de raccordement (9) avec la paroi du corps (5) du récipient (1), **caractérisé en ce que** ledit fond (6) comporte une pluralité d'ondulations radiales (13) s'étendant depuis au moins la zone centrale (11) jusqu'à proximité de l'assise (8), i.e. s'étendant au niveau de la voûte (6), une ondulation étant constituée d'une face concave (13a) et d'une face convexe (13b) tournées vers l'extérieur, la profondeur, c'est-à-dire la distance entre la crête d'une convexité (13b) et le fond d'une concavité (13a) desdites ondulations (13) étant croissante depuis la zone centrale (11) jusqu'à proximité de l'assise (8).

2. Récipient (1) suivant la revendication 1 **caractérisé en ce que** les ondulations radiales (13) sont en continuité de tangence.

3. Récipient (1) suivant la revendication 1 **caractérisé en ce que** les ondulations radiales (13) comportent au moins une facette.

4. Récipient (1) suivant la revendication 3 **caractérisé en ce que** chaque facette s'étend radialement.

5. Récipient (1) suivant la revendication 3 **caractérisé** en ce chaque facette s'étend perpendiculairement à un rayon du fond (6).

6. Récipient (1) suivant l'une quelconque des revendications 3 à 5 **caractérisé en ce que** chaque facette est plane ou en creux ou en relief.

7. Récipient (1) suivant l'une quelconque des revendications 1 à 6 **caractérisé en ce que** le rayon de courbure moyen des concavités (13a) des ondulations (13) est inférieur ou égal au rayon de courbure moyen des convexités (13b) des ondulations (13).

8. Récipient suivant l'une quelconque des revendications 1 à 7 **caractérisé en ce que** le rayon de courbure moyen des concavités (13a) des ondulations (13) est compris entre 0,5 et 1,1 fois le rayon de courbure moyen des convexités (13b) des ondulations (13).

9. Récipient suivant la revendication 8 **caractérisé en ce que** le rayon de courbure moyen des concavités (13a) des ondulations (13) est compris entre 0,65 et 0,85 fois le rayon de courbure moyen des convexités(13b) des ondulations (13).

10. Récipient suivant l'une quelconque des revendications 1 à 9 **caractérisé en ce que** le rayon de courbure moyen des concavités (13a) et/ou des convexités (13b) des ondulations (13) n'est pas constant le long d'un rayon du fond (6), depuis la zone centrale (11) vers l'assise (8).

11. Récipient suivant l'une quelconque des revendications 1 à 10 **caractérisé en ce que** le fond (6) comporte entre 3 et 15 d'ondulations (13) radiales.

12. Récipient suivant la revendication 11 **caractérisé en ce que** le fond (6) comporte préférentiellement entre 8 et 10 ondulations (13) radiales.

13. Récipient suivant l'une quelconque des revendications 1 à 12 **caractérisé en ce que** la hauteur de la voute (10), i.e. la distance séparant le plan d'assise à l'extrémité supérieure de la voûte (10), est comprise entre 0,15 et 0,35 fois le diamètre (D1) de l'assise (8).

14. Récipient suivant la revendication 13 **caractérisé en ce que** la hauteur de la voute (10) est comprise entre 0,2 et 0,25 fois le diamètre (D1) de l'assise (8) et, préférablement, est égale à 0,228 fois le diamètre (D1) de l'assise (8).

15. Récipient suivant l'une quelconque des revendications 1 à 14 **caractérisé en ce que** la profondeur d'une ondulation (13) au niveau du plan d'assise est comprise entre 0,2 et 0,45 fois la hauteur de la voûte (10).

16. Récipient suivant l'une quelconque des revendications 1 à 15 **caractérisé en ce que** la profondeur d'une ondulation (13) au niveau de la zone centrale (11) est comprise entre 0,03 et 0,15 fois la hauteur de la voûte (10).

17. Récipient suivant l'une quelconque des revendications 1 à 16 **caractérisé en ce que**, entre la zone centrale (11) et l'assise (8), la profondeur d'une ondulation (13) est comprise entre 0,2 et 0,45 fois la hauteur de la voûte (10).

18. Récipient suivant l'une quelconque des revendications 1 à 17 **caractérisé en ce que** lesdites ondulations (13) s'étendent au-delà de l'assise (8).

19. Récipient suivant l'une quelconque des revendication 1 à 17 **caractérisé en ce que** la face concave (13a) des ondulations (13) s'étend au-delà de l'assise (8) et **en ce que** la face convexe (13b) des ondulations (13) s'étend depuis la zone centrale (11)jusqu'à proximité de l'assise (8).

20. Récipient suivant la revendication 19 **caractérisé en ce que** le rayon de courbure dit extérieur du talon (7), i.e. le rayon de courbure du talon (7) entre l'assise (8) et la paroi de raccordement (9), est compris entre 0,07 et 0,2 fois le diamètre d'assise (D1).

21. récipient suivant la revendication 20 **caractérisé en ce que** le rayon de courbure extérieur du talon (7) est égal à 0,13 fois le diamètre d'assise (D1).

22. Récipient suivant l'une quelconque des revendications 20 ou 21 **caractérisé en ce que** le rayon de courbure dit intérieur du talon (7), i.e. le rayon de courbure du talon (7) entre l'extrémité distale de la face convexe (13b) des ondulations (13) et l'assise (8), est compris entre 0,6 et 1,4 fois le rayon de courbure extérieur dudit talon (7).

23. Récipient suivant la revendication 22 **caractérisé en ce que** le rayon de courbure dit intérieur du talon (7) est égal à 0,92 fois le rayon de courbure extérieur dudit talon (7).

24. Récipient suivant l'une quelconque des revendications 1 à 23 **caractérisé en ce que** la hauteur de la voûte (10), i.e. la distance séparant la zone centrale (11) du plan d'assise, est comprise entre 0,2 et 0,4 fois le diamètre (D1) de l'assise (8).

25. Récipient suivant l'une quelconque des revendications 1 à 23 **caractérisé en ce que** la largeur de l'assise (8) est comprise entre 0,1 et 2 mm et, préférentiellement, égale à 0,5 mm.

26. Fond de moule (23) pour la fabrication d'un récipient (1)selon l'une quelconque des revendications 1 à 25 à partir d'une préforme en plastique, ledit fond de moule (23) étant apte à être monté à l'une des extrémités d'un moule (20) comprenant deux parois mobiles l'une par rapport à l'autre et destinées à former le corps (5) du récipient (1), ledit fond de moule (23) comprenant au moins une première partie annulaire destinée à former au moins en partie le talon (7), i.e. le plan d'assise, et une seconde partie en forme de dôme destinée à venir au contact d'une zone centrale amorphe de la préforme pour former la voûte (10), ou comprenant une rondelle de fond (200) permettant de former le talon (7) du récipient (1) et d'une pièce de voûte (201) venant s'insérer dans ladite rondelle de fond (200), **caractérisé en ce que** ladite seconde partie ou ladite pièce de voûte (201) du fond de moule (23) comprend une pluralité d'ondulations (113) radiales s'étendant depuis au moins une zone centrale (111) jusqu'à la première partie annulaire ou jusqu'à la rondelle de fond (200), i.e. s'étendant au moins au niveau de la seconde partie en forme de dôme ou la pièce de voûte (201), la profondeur, c'est-à-dire la distance entre la crête d'une convexité (113b) et le fond d'une concavité (113a), desdites ondulations (113) étant croissante depuis la zone centrale (111) jusqu'à la périphérie de la seconde partie ou jusqu'à la rondelle de fond (200).

27. Fond de moule suivant la revendication 26 **caractérisé en ce que** le rayon de courbure moyen des concavités (113a) des ondulations (113) est inférieur ou égal au rayon de courbure moyen des convexités (113b) des ondulations (113).

28. Fond de moule suivant l'une quelconque des revendications 26 ou 27 **caractérisé en ce que** le rayon de courbure moyen des concavités (113a) des ondulations (113) est compris entre 0,5 et 1,1 fois le rayon de courbure moyen des convexités (113b) des ondulations (113).

29. Fond de moule suivant la revendication 28 **caractérisé en ce que** le rayon de courbure moyen des concavités (113a) des ondulations (113) est compris entre 0,65 et 0,85 fois le rayon de courbure moyen des convexités (113b) des ondulations (113).

30. Fond de moule suivant l'une quelconque des revendications 26 à 29 **caractérisé en ce que** le rayon de courbure moyen des concavités (113a) et/ou des convexités (113b) des ondulations (113) n'est pas constant le long d'un rayon du fond du fond de moule (23), depuis la zone centrale (111) vers la périphérie de la seconde partie ou vers la rondelle de fond (200).

31. Fond de moule suivant l'une quelconque des revendications 26 à 30 **caractérisé en ce que** le fond de moule (23) comporte entre 3 et 15 d'ondulations radiales en continuité de tangence.

32. Fond de moule suivant la revendication 31 **caractérisé en ce que** le fond de moule comporte entre 8 et 10 ondulations radiales en continuité de tangence.
